(19) Europäisches Patentamt

European Patent Office

Office européen des brevets

(11) EP 0 987 875 B1

# (12) FASCICULE DE BREVET EUROPEEN

(45) Date de publication et mention
de la délivrance du brevet:
**07.08.2002 Bulletin 2002/32**

(51) Int Cl.⁷: **H04N 1/195**

(21) Numéro de dépôt: **99420189.5**

(22) Date de dépôt: **09.09.1999**

(54) **Procédé pour transférer une image numérique en vue de sa restitution visuelle ou de son acquisition et dispositifs pour la mise en oeuvre de ce procédé**

Verfahren und Gerät zum Darstellen eines digitalen Bildes oder Erfassung desselben

Method and apparatus for visualising a digital image or for capture of the image

(84) Etats contractants désignés:
**AT BE CH CY DE DK ES FI FR GB GR IE IT LI LU MC NL PT SE**

(30) Priorité: **15.09.1998 FR 9811648**

(43) Date de publication de la demande:
**22.03.2000 Bulletin 2000/12**

(73) Titulaire: **KIS**
**38130 Echirolles (FR)**

(72) Inventeurs:
• **Lan, Ke-Hua**
**38100 Grenoble (FR)**
• **Lavergne, Patrice**
**38770 Monteynard (FR)**

(74) Mandataire: **Vuillermoz, Bruno et al**
**Cabinet Laurent & Charras**
**B.P. 32**
**20, rue Louis Chirpaz**
**69131 Ecully Cédex (FR)**

(56) Documents cités:
WO-A-86/05642          DE-U- 9 109 236
GB-A- 2 299 476

• KOLLARITS R V ET AL:
"NEAR-CONTINUOUS-TONE ELECTRONIC COLOR PRINTING ON LOW-SENSITIVITY PHOTOGRAPHIC MATERIALS" OPTICAL ENGINEERING, vol. 30, no. 9, 1 septembre 1991 (1991-09-01), pages 1281-1293, XP000230035

## Description

L'invention concerne un procédé perfectionné pour permettre le transfert d'une image numérique en vue de sa restitution visuelle en utilisant un écran à cristaux liquides transparent. Elle concerne également un tel procédé pour l'acquisition d'une telle image mettant en oeuvre une caméra CCD, c'est à dire une caméra intégrant un circuit à transfert de charges. Elle concerne également les dispositifs pour la mise en oeuvre d'un tel procédé.

Ces dernières années ont vu le développement d'une nouvelle technologie pour la projection et l'affichage d'informations mettant en oeuvre les signaux numériques. A cet effet se sont développés et sont de plus en plus mis en oeuvre des panneaux à cristaux liquides, également appelés écrans cristaux liquides, et plus communément dénommés sous l'expression en langue anglaise *«LCD»* (Liquid Cristal Display). De tels écrans LCD se sont également développés en relation avec les écrans pour micro-ordinateurs, mais également de télévision.

Dans le domaine de la photographie, est apparue récemment le concept dénommé « API » pour Advanced Photographie Imager, mettant en oeuvre le principe du stockage numérique de l'image. Ce stockage numérique de l'image impose, pour sa réalisation sur support notamment papier, sa restitution. Le papier mis en oeuvre dépend quant à lui du type d'impression : numérique ou argentique (thermique).

Dans le domaine de la photographie argentique en particulier, le support pour la restitution de l'image est constitué par du papier photosensible. A cet effet, l'image numérique est exposée sur le papier selon plusieurs méthodes connues, au moyen de différents composants pour l'affichage de l'image. On peut citer :

- l'exposition point par point, mettant en oeuvre un balayage laser ; si certes cette technologie permet d'aboutir à des résultats très corrects en termes de qualité, sa mise en oeuvre demeure exigeante dans le domaine de la précision mécanique et de l'ajustement optique. En effet, le papier est exposé en mouvement. Par ailleurs, il est de qualité spécifique, conçu pour accepter des durées d'exposition très courtes (typiquement 1 µs par pixel) Cette technologie reste donc réservée à des installations coûteuses, et les coûts de développement sont élevées.

- l'exposition par rangée de points en ligne : cette technologie fait appel par exemple à la mise en oeuvre de tubes cathodiques à fibres optiques. Elle -est tout particulièrement complexe à mettre en oeuvre, et souffre en outre d'une légère diffusion due aux fibres optiques. Elle exige également un dispositif de transport du papier complexe et très précis. Elle peut également être mise en oeuvre au moyen du système DMD (Digital Micro Mirrors) en mode linéaire, mis au point par TEXAS INSTRUMENTS. Ce système met en oeuvre une pluralité de micro-miroirs de forme carrée, chacun monté sur un axe rotatif, et susceptibles donc de subir une rotation de plus ou moins 10 degrés par rapport à une position origine. Chaque pixel d'informations est contrôlé directement par un micro-miroir correspondant. Ces miroirs sont susceptibles de pivoter en position active et position inactive selon une fréquence supérieure à 1000 fois par seconde. Cette rapidité permet d'aboutir à la reproduction d'échelle des gris et à celle de couleurs. En revanche, la résolution obtenue est limitée par la mise en oeuvre d'un composant DMD et n'est pas très satisfaisante.

- l'exposition par rangée de points en deux dimensions : elle peut être mise en oeuvre par la technologie DMD mentionnée précédemment, mais également par la technologie des tubes cathodiques plans. Celle-ci fait appel à des tubes haut de gamme ainsi qu'à une électronique coûteuse de très haut voltage.

- enfin, ce principe d'exposition peut être mis en oeuvre au moyen d'écrans à cristaux liquides (LCD). Géométriquement stable, ce composant ne nécessite pas de hauts voltages. Par ailleurs, sa fabrication, complètement automatisée assure une très bonne régularité en termes de performances. Cependant, son utilisation dans le domaine de la photographie et plus particulièrement dans le domaine de l'exposition de papier photosensible pose deux problèmes liés à la structure intrinsèque desdits écrans :

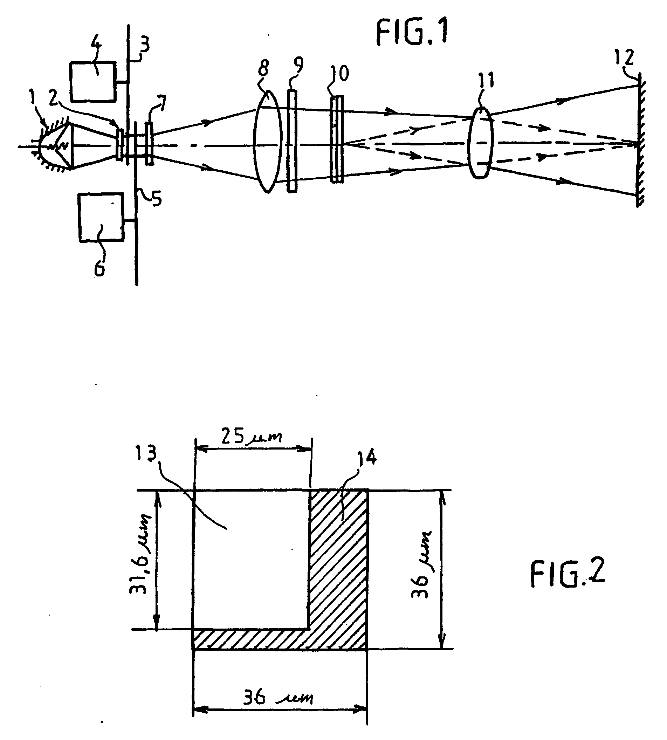

■ Le premier problème réside dans le fait que le pixel d'image sur un LCD, qui présente traditionnellement une forme carrée, comporte une surface active du pixel de forme rectangulaire qui ne représente qu'environ 60 à 70 % de la surface totale dudit pixel (voir à-cet-égard la représentation schématique d'un pixel de LCD sur la figure 2, dans laquelle la zone active est référencée (13) et la zone inactive est référencée (14)). Il existe donc une zone non active (14) (masque noir) du pixel d'image, sous la forme de deux bandes, respectivement une bande relativement large sur l'un des côtés du pixel, et une bande un peu moins large sur le côté adjacent immédiatement perpendiculaire. Cette zone non-active noire projetée sur un papier photosensible par un objectif de projection génère des traits blancs horizontaux et verticaux sur la photo définitive, ce qui limite la netteté, la résolution et partant, le rendu de la photo ;

■ le second problème réside dans le fait que les LCD actuels présentent une résolution limitée à 1024 x 1280 pixels environ. Cette résolution native ou inhérente à la technologie de fabrication, n'est pas suffisante pour réaliser des photos de format supérieur à 10 x 15 cm, puisqu'une telle résolution est déjà limitée à environ 210 dpi, soit environ 4 paires de lignes par mm (4pl/mm), c'est à dire la limite inférieure acceptable pour une photo numérique.

On a représenté sur la figure 1 une représentation schématique de la ligne d'exposition d'une tireuse traditionnelle. Classiquement, on retrouve au sein de celle-ci les différents éléments suivants :

- une source lumineuse (1), typiquement constituée par une lampe halogène de 250 W-24 V;
- un filtre anti-calorique (2) ;
- une tourelle d'obturation (3), mue en rotation au moyen d'un moteur électrique (4), destinée à obturer le faisceau incident émis par la source (1), et assurant également, si nécessaire, la fonction de diaphragme ;
- un porte-filtres (5), également mu en rotation au moyen d'un moteur électrique (6), et portant trois filtres, respectivement rouge, vert et bleu, en vue de la réalisation d'épreuves couleurs par synthèse additive;
- un diffuseur (7), destiné à élargir et à rendre plus uniforme le faisceau incident émanant de la source lumineuse (1);
- un condenseur (8), destiné à diriger le faisceau incident, après diffusion, au niveau d'un objectif de projection (11);
- un compensateur ou correcteur (9) de l'uniformité d'éclairage, typiquement constitué par un opalin ;
- un passe-vues (10), au niveau duquel le film est introduit et -cadré -pour permettre l'exposition des vues successives ;
- l'objectif de projection (11) déjà mentionné; celui-ci présente un facteur d'agrandissement variable selon le format de photos à réaliser ; il est destiné à projeter sur le papier photosensible (12) l'image du film présent dans le passe-vues.
- et enfin, un plateau destiné à recevoir le papier photosensible (12) au niveau duquel doit être imprimée l'image présente au niveau du passe-vues.

Afin de surmonter les inconvénients mentionnés précédemment, l'invention propose un procédé dans lequel, l'image numérique à restituer sous forme visuelle est affichée sur un écran LCD transparent, et qui consiste :

- à former l'image affichée sur le LCD au moyen d'un objectif de projection sur le support de restitution visuelle, et notamment sur un papier photosensible ;
- à opérer au moyen d'un organe optique unique au moins un décalage latéral dans le plan de projection de chacun des pixels de l'image affichée sur le LCD;

- et, à réaliser une ou plusieurs expositions au niveau dudit support de restitution visuelle pour chacun de ces décalages.

En d'autres termes, l'invention consiste à effectuer une ou plusieurs expositions en générant des petits décalages latéraux (environ un demi pixel) des images affichées sur le LCD dans le plan d'exposition, et ce uniquement par moyens optiques, de telle sorte à aboutir à une élimination totale ou partielle des traits blancs horizontaux et verticaux générés par le LCD et inhérents à sa technologie de fabrication. En revanche, ce procédé induit une légère surexposition générant des traits gris. Cependant, ces traits gris sont de faible contraste ou de dimensions réduites, de sorte qu'ils ne sont pas observables à l'oeil nu pour les photos de petits formats.

Selon une première forme de réalisation de l'invention, on effectue une seule exposition de l'image affichée sur le LCD, chacun des pixels de ladite image subissant un décalage continu suivant une trajectoire circulaire dans le plan d'exposition, ledit décalage de chacun des pixels étant centré par rapport au pixel considéré.

Selon une autre forme de réalisation de l'invention, on effectue un redimensionnement de l'image numérique à restituer et l'on divise ladite image-en trames affichables sur le LCD. Dans une première variante, on divise l'image en deux trames et l'on procède pour chaque trame affichée sur le LCD, à une exposition, en effectuant entre les deux expositions un décalage discret de l'ensemble des pixels de l'image affichée sur le LCD, selon les directions d'orientation OX ou OY desdits pixels, symétriquement par rapport au centre de chacun des pixels. Dans une seconde variante, on divise l'image en quatre trames et l'on procède pour chaque trame de l'image affichée à une exposition, en effectuant entre chacune des quatre expositions un décalage discret de l'ensemble des pixels de l'image affichée sur le LCD selon les directions d'orientation OX et OY desdits pixels, symétriquement par rapport aux axes OX et OY des pixels. On aura ainsi bien compris que l'on ne procède pas au décalage latéral de l'écran LCD, mais des seules images affichées sur ledit écran.

Outre l'élimination totale ou partielle des traits blancs inhérents à la technologie de fabrication du LCD, la mise en oeuvre de ce procédé permet également d'augmenter la résolution de l'image finale, de par la multiplication approximative, par 2 ou par 4 du nombres d'expositions.

Avantageusement, le décalage des pixels de l'image affichée sur le LCD, induit par un organe optique unique, s'effectue dans le plan d'exposition (OX,OY), c'est à dire dans le plan perpendiculaire à l'axe optique de projection et d'exposition, et ce, selon les deux axes, respectivement horizontal OX et vertical OY définissant ledit plan, l'axe optique étant défini ci-après par OZ.

L'invention concerne également les dispositifs pour la mise en oeuvre de -ce procédé.

Elle concerne tout d'abord un dispositif pour restituer visuellement une ou des images numériques affichées sur un écran LCD. Ce dispositif comprend :

- une source lumineuse, sur le trajet optique de laquelle est positionné un écran LCD transparent au niveau duquel sont affichées des images numériques, notamment par le biais d'une unité centrale,
- un obturateur, destiné à stopper le faisceau d'exposition, et par exemple positionné entre la source lumineuse et l'écran LCD;
- un objectif de projection, situé entre l'écran LCD et le papier à exposer ;
- un un polariseur linéaire situé entre la source lumineuse et l'écran LCD.

Selon l'invention, il comprend une lame à faces parallèles, unique, d'épaisseur constante, transparente au spectre de la lumière mise en oeuvre et notamment au spectre visible, et située sur le trajet optique de la source entre l'écran LCD et l'objectif de projection. Cette lame à faces parallèles est susceptible d'être animée d'un mouvement de rotation discret ou continu, dont l'axe de rotation est parallèle ou non à l'axe optique. En outre, ladite lame est inclinée d'un angle de valeur déterminée par rapport au plan perpendiculaire à son axe de rotation. En d'autres termes, l'axe de rotation de la lame n'est jamais confondu avec l'une quelconque des normales à ladite lame.

Cette architecture permet de réaliser plus facilement et surtout de manière plus fiable les décalages latéraux de l'image affichée sur le LCD par rapport aux dispositifs connus de l'art antérieur, mettant en oeuvre soit un décalage mécanique du LCD, soit un décalage mécanique du support de restitution visuelle. En d'autres termes, on remplace un décalage mécanique, donc difficilement fiable pour des déplacements de faibles amplitudes, par un décalage optique.

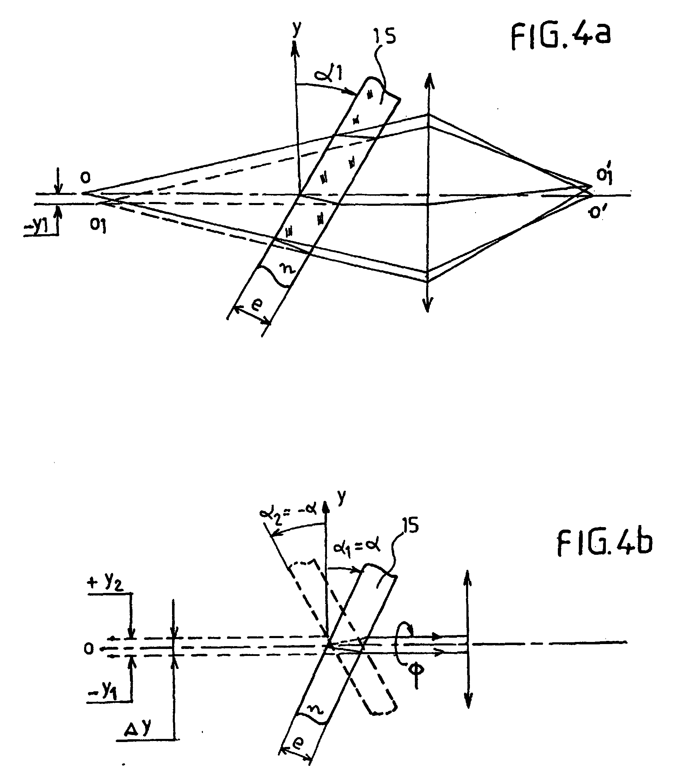

Compte tenu des phénomènes optiques bien connus de la réflexion et de la réfraction lumineuse, et notamment les lois de Snell, la mise en oeuvre d'une telle lame à faces parallèles sur le trajet optique de l'image affichée sur le LCD induit un décalage, fonction d'une part, de l'angle d'incidence ou d'inclinaison $\alpha$ de la lame par rapport au plan de projection (OX,OY), d'autre part, de l'indice de réfraction n du matériau constitutif de la lame, et enfin de l'épaisseur e de celle-ci. Ce décalage se traduit par un décalage de l'image au niveau du papier à insoler c'est à dire de la zone de projection. Les figures 4a et 4b permettent de recherche la valeur de ce décalage en fonction des paramètres physiques mis en oeuvre.

Dans cet exemple, le faisceau incident est orienté selon l'axe OZ, et dirigé selon OZ. En l'absence de la lame (15), la position initiale de l'image ou d'un pixel est positionné à l'ordonnée Y = 0. En revanche, si l'on introduit la lame (15), avec l'inclinaison $\alpha_1 = \alpha$, on

observe un décalage $(-Y_1)$, inhérent aux lois optiques précitées, défini comme suit :

$$Y_1 \approx -\left(1 - \frac{1}{n}\right)e\alpha_1 = -\left(1 - \frac{1}{n}\right)e\alpha$$

L'équation ci-dessus est valable pour de faibles valeurs de $\alpha$.

Si l'on introduit la lame (15), avec l'inclinaison $\alpha_2 = -\alpha$, on observe un décalage $Y_2$ défini comme suit :

$$Y_2 \approx -\left(1 - \frac{1}{n}\right)e\alpha_2 = \left(1 - \frac{1}{n}\right)e\alpha$$

Si $\Delta Y$ représente le décalage latéral des images correspondant aux deux orientations de la lame, séparées d'un angle de rotation $\phi$ égal à 180 ° autour de son axe de rotation, dont il est rappelé qu'il n'est pas confondu avec l'une quelconque des normales à la lame, et qui par simplification est dans les figures décrites confondu avec l'axe OZ, on obtient :

$$\Delta Y = Y_2 - Y_1 = \left(1 - \frac{1}{n}\right)e.2\alpha$$

D'où il est possible d'extraire $\alpha$ :

$$\alpha \approx \frac{\Delta Y}{2\left(1 - \frac{1}{n}\right)e}$$

Ainsi, si l'on souhaite un décalage de l'ordre de 25 $\mu$m, et considérant les données de la lame suivante :

- e = 1 mm
- n = 1,5187

on aboutit à une valeur pour l'angle $\alpha$ de 0,0366 radian, soit environ 2,1°.

Par LCD transparent, on entend un écran LCD laissant passer tout le spectre visible.

Dans le cadre de la réalisation de photos couleurs, on adjoint à l'installation une tourelle porte-filtres, afin de pouvoir disposer des trois couleurs primaires, rouge, vert et bleu, et procéder à une exposition de chacun des trois plans d'image rouge, vert et bleu d'une même trame de l'image couleur originale, la couleur finale étant obtenue selon le procédé bien connu de la synthèse additive.

L'invention concerne ensuite un procédé et un dispositif pour transférer une image numérique en vue de son acquisition par une installation mettant en oeuvre une caméra CCD, c'est à dire intégrant un circuit à transfert de charges.

Ce procédé consiste :

■ à former l'image du sujet ou de l'objet à acquérir au moyen d'un objectif d'acquisition sur le capteur CCD de la caméra ;

■ à opérer au moyen d'un organe optique unique au moins un décalage latéral dans le plan d'acquisition de l'image du sujet à acquérir formée sur le CCD;

■ et à réaliser une ou plusieurs acquisitions au niveau dudit circuit CCD de la caméra pour chacun de ces décalages.

Le dispositif correspondant comprend :

■ un objectif d'acquisition, situé entre la caméra CCD et le sujet ou l'objet dont on souhaite acquérir l'image numérique ;

■ une lame à faces parallèles, unique, d'épaisseur constante, transparente au spectre de la lumière mise en oeuvre, et notamment du spectre visible, située sur le trajet optique entre la caméra CCD et l'objectif d'acquisition, ladite lame à faces parallèles étant susceptible d'être animée d'un mouvement de rotation discret, dont l'axe de rotation est parallèle ou non à l'axe optique, et étant inclinée d'un angle de valeur déterminée par rapport au plan perpendiculaire à son axe de rotation.

L'invention concerne enfin un dispositif de projection d'une image numérique, notamment sur un écran, en vue de sa restitution visuelle. Ce dispositif comprend :

■ une source lumineuse,

■ un moyen pour séparer le faisceau incident issu de la source lumineuse en trois faisceaux distincts, correspondants aux trois couleurs primaires rouge, vert et bleu, sur le trajet optique de chacun desquels sont positionnés un polariseur linéaire et un écran LCD transparent, alimenté chacun par la même image numérique du plan couleur correspondant, notamment par le biais d'une unité centrale,

■ un organe de combinaison des signaux issus de chacun des trois LCD;

■ un objectif de projection situé entre l'organe de combinaison et l'écran destiné à recevoir l'image projetée ;

■ une lame à faces parallèles transparente au spectre visible, située sur le trajet optique entre l'organe de combinaison et l'objectif de projection, ladite lame à faces parallèles étant inclinée d'un angle de valeur déterminée par rapport au plan latéral, perpendiculaire à l'axe optique de projection, ladite lame étant animée d'un mouvement de rotation continue, dont l'axe de rotation est parallèle ou non à l'axe optique, et non-confondu avec l'une quelconque des normales de ladite lame..

La manière dont l'invention peut être réalisée et les avantages qui en découlent ressortiront mieux des exemples de réalisation qui suivent, donnés à titre indicatif et non limitatif à l'appui des figures annexées.

La figure 1 est comme déjà indiqué, une représentation schématique de la ligne d'exposition d'une tireuse traditionnelle.

La figure 2 est une représentation schématique d'un pixel de LCD.

La figure 3 illustre une représentation schématique de la transformation de l'image initiale à restituer, et notamment de la distribution de l'image originale numérique.

Les figures 4a et 4b illustrent le décalage dans l'espace d'un faisceau incident généré par une lame à faces parallèles.

La figure 5 est une représentation schématique de la ligne d'exposition d'une tireuse conforme à l'invention.

La figure 6 est une représentation de l'orientation de la lame à faces parallèles.

La figure 7 est une représentation schématique de la ligne d'exposition perfectionnée d'une tireuse selon l'invention.

La figure 8 illustre le principe de redimensionnement du pixel mis en oeuvre dans l'installation de la figure 7.

La figure 9 est une représentation schématique de la ligne d'acquisition d'une caméra CCD selon le procédé mis en oeuvre dans l'invention.

La figure 10 est une représentation schématique de la ligne d'exposition d'un projecteur mettant en oeuvre le procédé de l'invention.

La figure 11 est une représentation schématique d'une réalisation du dispositif multiplicateur de pixels de la ligne d'exposition d'une tireuse conforme à l'invention.

La figure 12 est une représentation schématique d'une réalisation de la ligne optique d'exposition intégrant la lame à faces parallèles selon la figure 11.

La description qui suit est tout d'abord particulièrement orientée vers un dispositif intégré au niveau d'une installation pour effectuer le tirage d'épreuves photographiques.

Cependant, il est bien entendu que l'invention ne saurait se limiter à cette seule application, et que notamment, elle peut être mise en oeuvre dans le cadre de l'acquisition d'images par le biais de caméras CCD, c'est à dire caméra à dispositif à transfert de charges et autres dispositifs de projection d'images.

On a déjà décrit en liaison avec la figure 1, la ligne d'exposition d'une tireuse traditionnelle. Selon une caractéristique fondamentale de l'invention, le passe-vues (10) de cette tireuse est remplacé par un ensemble constitué par un écran LCD (16), par exemple constitué par un panneau commercialisé par la société SONY sous la référence LCX017AL, comportant une matrice de 1024 x 768 pixels actifs, et au niveau duquel est susceptible d'être reproduite une image stockée sous forme numérique, précédé par un polariseur linéaire (17) nécessaire pour le fonctionnement dudit écran LCD, destiné à polariser la lumière issue du faisceau incident selon une direction déterminée. Bien entendu, on pourrait remplacer l'écran LCD précité par un autre écran LCD, par exemple du type SONY LCX028AL, comportant une matrice de 1280 x 1024 pixels actifs, mais qui nécessite pour son fonctionnement deux polariseurs.

En outre, selon une autre caractéristique fondamentale de l'invention, est intercalée sur l'axe optique (18) de cette installation, entre l'écran LCD (16) et l'objectif de projection et d'agrandissement (11), une lame à faces parallèles unique (15), d'épaisseur constante comprise entre 1 et 2 mm envion, centrée au niveau dudit axe optique.

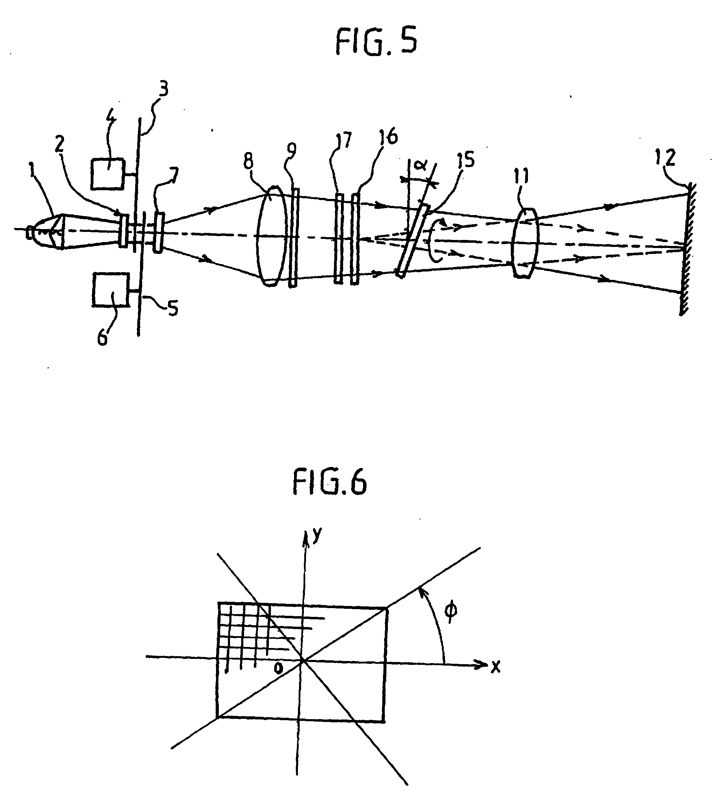

Cette lame à faces parallèles (15) présente une inclinaison selon un angle $\alpha$ d'environ 1 à 2° par rapport au plan perpendiculaire à l'axe de rotation de la lame, c'est à dire un plan perpendiculaire à l'axe optique (18). Dans l'exemple décrit, cet axe de rotation est parallèle à l'axe optique OZ, mais cette caractéristique n'est pas obligatoire. En revanche, l'axe de rotation de la lame n'est en aucun cas confondu avec l'une quelconque des normales à ladite lame. De la sorte, lors de la rotation de la lame autour de son axe de rotation, l'angle a d'inclinaison s'oriente dans le sens de l'angle de rotation $\phi$, tel que décrit en liaison avec les figures 4b et 6 par rapport au référentiel OZ. Cette rotation induit un décalage latéral (ou polaire) de l'image dans le plan (OX,OY), orienté dans le sens de rotation $\phi$. Avec une rotation continue de la lame, les positions des images décalées latéralement tracent une trajectoire circulaire dans le plan perpendiculaire à l'axe optique. Avec des rotations discrètes, des images décalées correspondantes peuvent être obtenues en tant que de besoin.

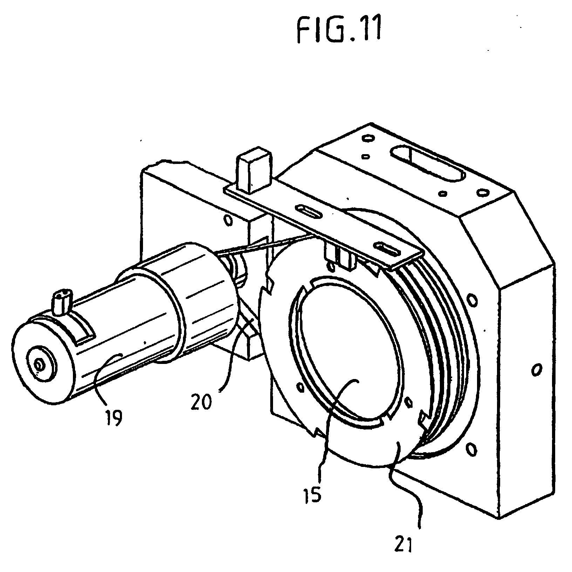

Cette lame est par exemple réalisée en verre optique transparent, et est susceptible de tourner par rapport à l'axe optique (18), sous l'action d'un moteur électrique (19) (figure 11).

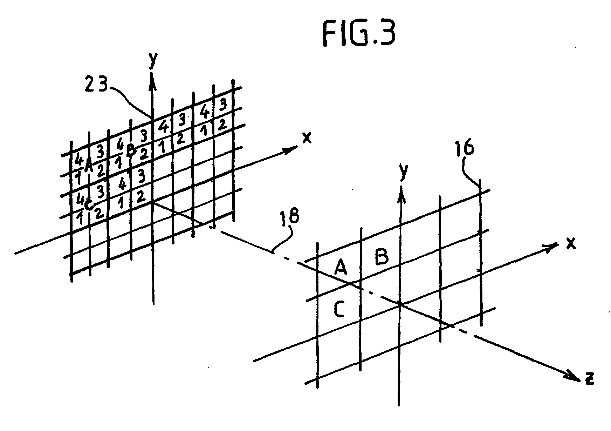

On a représenté à l'aide de la figure 3, une explication simplifiée du procédé mis en oeuvre. Au sein de cette figure, la référence (23) représente l'image numérique originale, obtenue et stockée selon une résolution de 2048 x 1536 pixels au sein d'une mémoire associée à une unité centrale de commande et de traitement (non représentée). Cette image est représentée centrée selon l'axe optique (18) de l'installation. Bien entendu, au sein de cette installation, l'image originale ne figure pas au lieu indiqué, mais est stockée dans une mémoire numérique. Elle n'a été représentée ici que pour la commodité du raisonnement.

Cette image originale subit, si nécessaire, au niveau de l'unité centrale, un redimensionnement en 2048 x 1536 pixels, c'est à dire exactement en quatre fois plus de pixels que le nombre de pixels disponibles au niveau de l'écran LCD (16). Par ailleurs, au sein de cette même unité centrale, cette image ainsi redimensionnée est divisée en quatre trames de 1024 x 768 pixels. Ont ainsi été matérialisés sur la figure 3, ces quatre trames $(A_1, B_1, C_1, ....)$, $(A_2, B_2, C_2, ....)$, $(A_3, B_3, C_3, ....)$, $(A_4, B_4, C_4, ....)$ sous la forme de carré petites dimensions référencés 1, 2, 3, 4.

Les pixels de l'écran LCD ont été référencés sur la figure 3 par les lettres A, B, C., etc.

Selon un mode de réalisation de l'invention, dans lequel on procède pour chaque image à restituer à quatre expositions, les quatre trames de l'image originale vont être affichées successivement sur l'écran LCD (16),-en procédant, entre chaque exposition, à la rotation de la lame à faces parallèles (15) autour de son axe de rotation (18) d'un angle d'une valeur $\phi = 90°$, de telle sorte à induire un décalage au niveau du plan d'exposition, de chacune des trames élémentaires en résultant.

Il va être ainsi détaillé ci-après les quatre phases d'exposition pour une image donnée.

<u>Phase 1</u>

La lame à faces parallèles (15) est orientée selon un angle $\phi$ de 45°.

On procède numériquement, à l'aide de l'unité centrale de traitement, à l'affichage sur le LCD, d'une première trame de pixels de l'image originale (23) référencés 1, c'est à dire $A_1$, $B_1$, $C_1$, etc. On dispose donc d'une image sur le LCD comportant 1024 x 768 pixels.

Cette image est exposée par le faisceau incident sur le papier photosensible (12).

<u>Phase 2</u>

On oriente la lame (15) selon un angle $\phi$ de 135°.

On procède numériquement comme dans la phase précédente, à l'affichage sur le LCD, des seuls pixels de l'image originale (23) correspondant à une autre trame, soit les pixels référencés 2, c'est à dire $A_2$, $B_2$, $C_2$, etc. On dispose donc d'une nouvelle image sur le LCD comportant également 1024 x 768 pixels.

On projette et expose cette image sur la même feuille de papier photosensible que pour la phase précédente.

Compte tenu de la rotation de 90° de la lame, on introduit, comme déjà précisé, un décalage de l'image dans le plan (OX, OY) du papier photosensible, et donc à la révélation sur celui-ci de 1024 x 768 pixels. On choisit les caractéristiques de la lame (15), et notamment le paramètre sur lequel on peut jouer le plus facilement, c'est à dire son angle d'inclinaison α, de telle sorte que le décalage engendré soit sensiblement égal à la distance d'un demi-pixel du LCD. De fait, on détermine α selon la formule suivante :

$$\alpha = \frac{\Delta}{2\left(1 - \frac{1}{n}\right)e}$$

où

$$\Delta = \frac{largeur\ du\ pixel}{\sqrt{2}}$$

Phase 3

On oriente la lame (15) selon un angle φ de 225°, et l'on recommence l'opération de projection et d'exposition sur la même feuille de papier photosensible, cette fois des seuls pixels de l'image originale (23) référencés 3, c'est à dire $A_3$, $B_3$, $C_3$, etc.

Phase 4

On oriente la lame (15) selon un angle φ de 315°, et l'on recommence l'opération de projection et d'exposition sur la même feuille de papier photosensible, cette fois des seuls pixels de l'image originale (23) référencés 4, c'est à dire $A_4$, $B_4$, $C_4$, etc.

De la sorte, on conçoit que pour chaque pixel du LCD va correspondre quatre expositions différentes. On va donc par ce biais multiplier par quatre le nombre de pixels au niveau de l'impression, optimisant de la sorte la résolution ou définition définitive, puisque on va retrouver au niveau de l'image restituée quasiment le nombre de pixels que comporte l'image originale.

Bien entendu, entre chaque exposition du même pixel, on obture le faisceau incident au moyen de l'obturateur (3). En outre, dans le cadre de la réalisation d'épreuves couleur, on procède pour chacun des trois plans d'images rouge, vert et bleu de chaque trame de l'image originale à une exposition correspondant à chacune des trois couleurs rouge, vert et bleu.

Par ailleurs, la superposition des quatre trames d'images décalées d'un demi pixel va permettre de masquer les lignes verticales et horizontales blanches habituellement observées par la mise en oeuvre d'un LCD. En effet, ainsi que déjà dit, et comme on peut le voir sur la figure 2, chaque pixel d'un LCD dispose d'une zone optiquement active (13) et d'une zone optiquement inactive (14). En multipliant par 4 l'exposition de chacun des pixels LCD, on va aboutir à une élimination complète de la restitution des traits blancs sur la photo définitive, mais en revanche, à une légère surexposition sur des zones de pixels d'image, pouvant se matérialiser par des traits sombres ou gris sur des photos. Cependant, ces surexpositions sont invisibles à l'oeil nu pour de petits formats (par exemple 10 x 15).

Dans une variante de l'invention, l'image originale (23) est divisée en deux trames seulement de pixels. Dans cette hypothèse, la méthode décrite ci-dessus demeure rigoureusement la même, mais on ne procède plus cette fois qu'à deux expositions, en effectuant entre les deux expositions une seule rotation de la lame (15). Les valeurs de φ sont alors déterminées selon le recouvrement du pixel optimal. La résolution du LCD est dans ce cas multipliée sensiblement par 2.

Dans une autre variante simplifiée de l'invention, l'image originale n'est pas divisée en trames. Elle est donc affichée après redimensionnement telle quelle sur l'écran LCD (16). Pour chacune des expositions de l'écran LCD, on fait subir à la lame à faces parallèles (15) une rotation continue suffisante autour de son axe de rotation (18). Pendant cette ou ces rotations, l'obturateur (3) demeure ouvert.

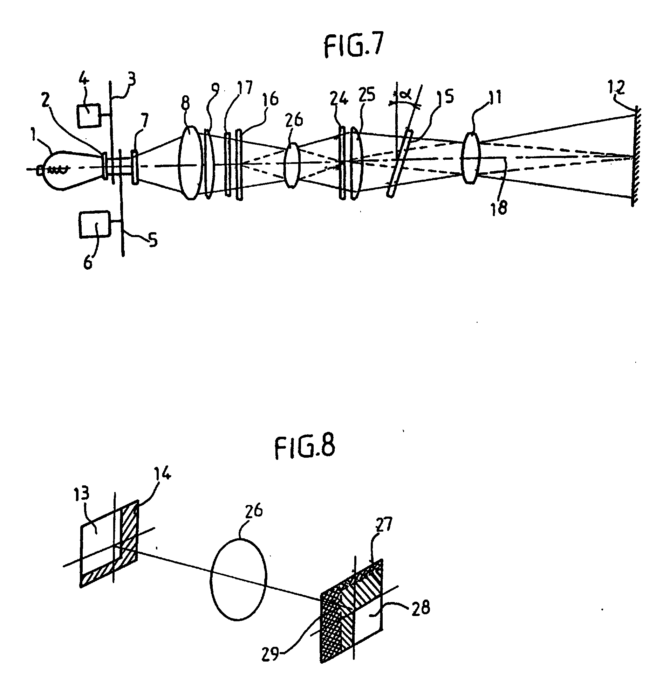

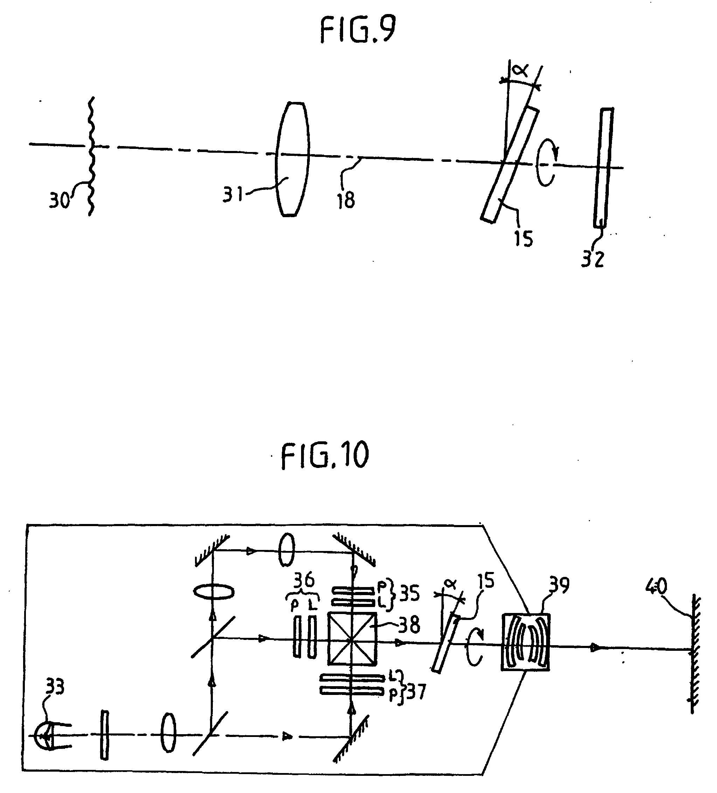

Dans une version évoluée de l'invention, représentée en liaison avec les figures 7 et 8, on cherche surtout à optimiser la résolution, tout en s'affranchissant définitivement des traits verticaux ou horizontaux au niveau de la restitution finale, inhérents comme déjà précisé à la technologie de l'écran LCD.

Cette forme de réalisation n'est donc applicable qu'en liaison avec la multiplication des pixels du LCD, donc dans le cadre de la division de l'image initiale en quatre trames.

Comme on peut le voir sur la figure 7, l'image affichée sur le LCD (16) est projetée par un objectif (26) sur un masque de pixels (24), destiné à redimensionner l'image de la zone active (13) du pixel LCD, notamment selon une forme carrée. Cette image redimensionnée traverse une lentille de champ (25), destinée à faire converger le faisceau au niveau de l'objectif de projection (11). Entre la lentille (25) et ledit objectif, est intercalée la lame à faces parallèles (15) décrite précédemment.

Avec quatre expositions correspondant respectivement aux quatre trames de pixels de l'image originale, on aboutit au niveau de l'image restituée à la superposition de quatre pixels représentatifs limitativement de la zone active du pixel LCD. On annule de la sorte les effets inhérents à la surexposition, tels que décrits précédemment.

La grille (24) est par exemple constituée par une plaque de verre recevant une émulsion répartie de telle sorte à ne laisser passer que 25% en surface du pixel LCD.

On a représenté sur la figure 8, l'image (27) dudit pixel après passage par l'objectif (26). On observe en (28) les 25% qui ont pu traverser le système. (29) représente la frontière entre la zone active et la zone inactive du pixel LCD.

On peut de la sorte affiner la restitution finale de l'image originale, et surtout réaliser des agrandissements supérieurs au format 13 x 18, et typiquement atteindre le format A4 ou 24 x 30 cm avec une résolution d'au moins 210 dpi en utilisant un écran LCD de résolution de 1280 x 1024 pixels.

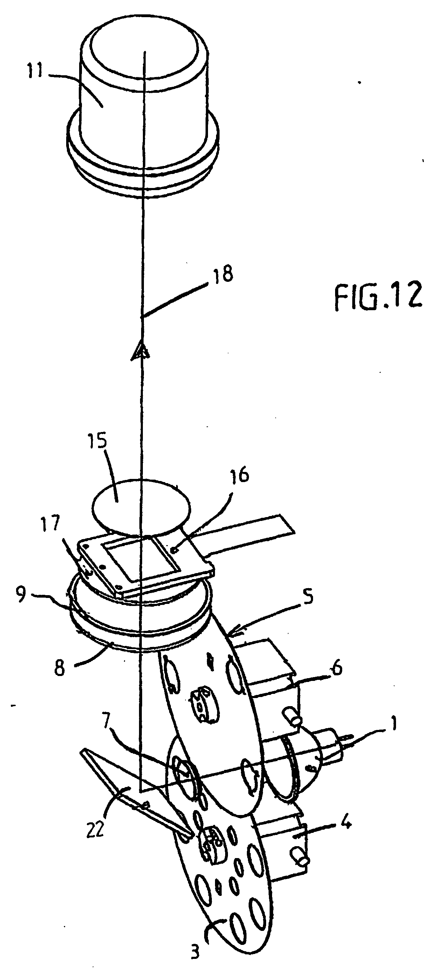

On a représenté en liaison avec les figures 11 et 12 une réalisation de certains des éléments constitutifs de la ligne d'exposition de la tireuse conforme à l'invention. Dans cet exemple, afin d'aboutir à des gains de place, la source lumineuse (1) est orientée à 90 ° par rapport à l'axe optique (18), mais un miroir à 45° (22) permet de réorienter le faisceau incident.

On a représenté sur la figure 12 le moteur électrique (19) assurant la rotation de la lame (15), par le biais d'une courroie crantée (20) venant engrener dans une couronne (21) conformée en conséquence, au niveau dudit module.

Le même principe général de l'invention peut également être mis en oeuvre dans le cadre de l'acquisition de signaux optiques lors de la mise en oeuvre de caméra CCD. On a représenté essentiellement en liaison avec la figure 9, la ligne optique d'acquisition de ces signaux. L'objet (30) à acquérir est situé sur le trajet optique d'une caméra CCD (32). Entre les deux, sont successivement positionnés un objectif de projection (31) et la lame à faces parallèles (15) conforme à l'invention. Les signaux optiques subissent un décalage au niveau du CCD, de sorte qu'on peut multiplier la résolution ou définition de celui-ci selon le même principe que celui décrit précédemment.

Enfin, l'invention concerne également un projecteur d'images mettant en oeuvre le procédé de l'invention. On a décrit en liaison avec la figure 10, la ligne d'exposition d'un tel dispositif. Celui-ci comporte une source lumineuse (33), scindée en trois composantes, rouge, vert et bleu au moyen de dispositifs appropriés. Chacune de ces trois composantes traverse un ensemble (35, 36, 37) constitué par un polariseur linéaire et un LCD, au niveau duquel sont affichées des images numériques, la même au niveau des trois LCD, les faisceaux émergents de ces ensembles étant recombinés au niveau d'un organe (38) connu pour cette application. Le faisceau résultant traverse une lame à faces parallèles (15) du type de celle précédemment décrite, tournant en continu à vitesse élevée, typiquement 24 tours par seconde, avant de traverser un objectif de projection (39), pour atteindre le plan de visualisation (40). On aboutit une nouvelle fois à une optimisation de la restitution des images numériques ainsi projetées.

Afin de diminuer la sensibilité de l'angle de vision sur le contraste de l'image affichée sur l'écran LCD, on utilise un système optique télécentrique en soi connu.

Par ailleurs, si dans les exemples décrits, il a été montré la mise en oeuvre du procédé et du dispositif conformes à l'invention induisant un décalage de l'image d'un demi pixel, ce décalage peut être un multiple impaire du demi pixel, et notamment, 3/2 pixels, 5/2 pixels, etc. . Le recours à un décalage plus important peut aboutir à une meilleure homogénéité au niveau du tirage restitué.

On conçoit tout l'intérêt de l'invention, dans le cadre de l'optimisation de la qualité de restitution ou d'acquisition de photographies en mode numérique, d'autant que la technologie mise en oeuvre fait appel à des composants faciles à manipuler, peu onéreux, et fonctionnant en outre en basse tension.

## Revendications

**1.**    Procédé pour restituer visuellement une image numérique affichée sur un écran à cristaux liquides LCD transparent, *caractérisé* **en ce qu'**il consiste :

- ■  à former l'image affichée sur le LCD sur le support de restitution visuelle, et notamment sur un papier photosensible au moyen d'un objectif de projection ;
- ■  à opérer au moyen d'un organe optique unique au moins un décalage latéral dans le plan de projection de chacun des pixels de l'image affichée sur le LCD,
- ■  et à réaliser une ou plusieurs expositions au niveau dudit support de restitution visuelle pour chacun de ces décalages.

**2.**    Procédé pour acquérir sur le circuit à transfert de charges (CCD) d'une caméra une image numérique, *caractérisé* **en ce qu'**il consiste

- ■  à former l'image d'un sujet sur le CCD au moyen d'un objectif d'acquisition ;
- ■  à opérer au moyen d'un organe optique unique au moins un décalage latéral dans le plan d'acquisition de l'image formée sur le CCD,
- ■  et à réaliser une ou plusieurs acquisitions au niveau dudit CCD pour chacun de ces décalages.

**3.**    Procédé selon la revendication 1, *caractérisé* **en ce que** l'on effectue une seule exposition de l'image affichée sur le LCD, et **en ce que** chacun des pixels de ladite image subit un décalage continu selon une trajectoire circulaire dans le plan d'exposition, ledit décalage de chacun des pixels étant centré par rapport au pixel considéré.

**4.**    Procédé selon la revendication 1, *caractérisé* **en ce que** :

- •  on effectue un redimensionnement de l'image numérique à restituer;
- •  on divise ladite image en deux trames affichables sur le LCD;
- •  et on procède pour chaque trame de l'image affichée sur le LCD, à une exposition, en effectuant entre les deux expositions un décalage discret de l'ensemble des pixels de l'image affichée sur le LCD selon les directions d'orientation OX et OY desdits pixels symétriquement par rapport au centre de chacun des pixels.

5. Procédé selon la revendication 1, **caractérisé en ce que**

   • on effectue un redimensionnement de l'image numérique à restituer;
   • on divise ladite image en quatre trames affichables sur le LCD;
   • et on procède pour chaque trame de l'image affichée sur le LCD, à une exposition, en effectuant entre chacune des quatre expositions un décalage discret de l'ensemble des pixels de l'image affichée sur le LCD selon les directions d'orientation OX et OY desdits pixels, symétriquement par rapport aux axes OX et OY des pixels.

6. Procédé selon l'une des revendications 4 et 5, **caractérisé en ce que** chacune des trames subit trois plans d'images, selon les trois couleurs rouge, vert et bleu, les images résultantes étant alors en couleur selon le procédé de synthèse additive.

7. Dispositif pour restituer visuellement une ou plusieurs images numériques affichées sur un écran LCD transparent (16), **caractérisé en ce qu'**il comprend

   ■ une source lumineuse (1), sur le trajet optique de laquelle est positionné ledit écran LCD (16) au niveau duquel sont affichées des images numériques, notamment par une unité centrale,
   ■ un obturateur (3), destiné à obturer sur demande le faisceau de lumière ;
   ■ un objectif de projection (11), situé entre l'écran LCD (16) et le papier à exposer (12);
   ■ un polariseur linéaire (17) situé entre la source lumineuse (1) et l'écran LCD;
   ■ une lame à faces parallèles (15) unique, d'épaisseur constante, transparente au spectre de lumière mise en oeuvre, située sur le trajet optique OZ de la source entre l'écran LCD (16) et l'objectif de projection (11), ladite lame à faces parallèles étant susceptible d'être animée d'un mouvement de rotation discret ou continu, dont l'axe de rotation est parallèle ou non à l'axe optique, ladite lame (15) étant incliné d'un angle a fixe par rapport au plan perpendiculaire à son axe de rotation.

8. Dispositif selon la revendication 7, **caractérisé en ce qu'**il comporte en outre une tourelle (5) motorisée (6) portant des filtres, respectivement rouge, vert et bleu, en vue de la réalisation de photos couleur.

9. Dispositif selon l'une des revendications 7 et 8, **caractérisé en ce que** la rotation de la lame à faces parallèles (12) s'effectue au moyen d'un moteur électrique.

10. Dispositif selon la revendication 7, **caractérisé en ce qu'**il comprend en outre:

    ■ un masque (24) situé en aval de l'écran LCD (16), destiné à ne sélectionner que partie de la zone active (13) de chacun des pixels LCD;
    ■ un objectif de projection (26), destiné à afficher sur le masque (24) l'image affichée sur le LCD;
    ■ une lentille de champ (25), destinée à faire converger le faisceau lumineux issu du masque (24) au niveau de l'objectif de projection (11);

    ladite lame à faces parallèles (15) étant située sur le trajet optique OZ de la source entre la lentille de champ (25) et l'objectif de projection (11).

11. Dispositif pour acquérir sur le circuit à transfert de charges (CCD) d'une caméra une image numérique, **caractérisé en ce qu'**il comprend :

    ■ un objectif d'acquisition (31), situé entre la caméra CCD (32) et le sujet ou l'objet (30) dont on souhaite acquérir l'image numérique ;
    ■ une lame à faces parallèles (15), unique, d'épaisseur constante, transparente au spectre de lumière mise en oeuvre, située sur le trajet optique entre la caméra CCD et l'objectif d'acquisition, ladite lame à faces parallèles étant susceptible d'être animée d'un mouvement de rotation discret, dont l'axe de rotation est parallèle ou non à l'axe optique, ladite lame étant incliné d'un angle α fixe par rapport au plan perpendiculaire à son axe de rotation.

12. Dispositif de projection d'une image numérique, notamment sur un écran, en vue de sa restitution visuelle, **caractérisé en ce qu'**il comprend :

    ■ une source lumineuse (33),
    ■ un organe pour séparer le faisceau incident issu de la source lumineuse en trois faisceaux distincts, correspondants aux trois couleurs primaires rouge, vert et bleu, sur le trajet optique de chacun desquels sont positionnés un polariseur linéaire et un écran LCD transparent monochrome, chacun des trois LCD affichant simultanément la même image numérique, notamment par 1e biais d'une une unité centrale,
    ■ un organe de combinaison (38) des signaux issus de chacun des trois LCD;

- un objectif de projection (39), situé entre l'organe de combinaison et l'écran (40) destiné à recevoir l'image projetée ;
- une lame à faces parallèles (15), unique, d'épaisseur constante, transparente au spectre de lumière mise en oeuvre, située sur le trajet optique entre l'organe de combinaison et l'objectif de projection, ladite lame à faces parallèles étant animée d'un mouvement de rotation continu, dont l'axe de rotation est parallèle ou non à l'axe optique, ladite lame (15) étant incliné d'un angle α fixe par rapport au plan perpendiculaire à son axe de rotation.

**Patentansprüche**

1. Verfahren zur visuellen Wiedergabe eines digitalen Bildes, welches auf einem transparenten LCD-Flüssigkristall-Bildschirm angezeigt wird, **gekennzeichnet durch:**

   - Bilden des auf dem LCD angezeigten Bildes auf dem visuellen Wiedergabeträger und insbesondere auf einem photosensiblen Papier mittels eines Projektionsobjektivs;
   - Bewirken mittels eines einzigen optischen Organs mindestens einer seitlichen Verschiebung in der Projektionsebene jedes der Pixel des auf dem LCD angezeigten Bildes,
   - und Durchführung einer oder mehrerer Belichtungen im Bereich des genannten visuellen Wiedergabeträgers für jede dieser Verschiebungen.

2. Verfahren zur Erfassung eines digitalen Bildes auf dem ladungsgekoppelten CCD-Bauelement einer Kamera, **gekennzeichnet durch:**

   - Bilden des Bildes eines Gegenstandes auf dem CCD mittels eines Aufnahmeobjektivs;
   - Bewirken mittels eines einzigen optischen Organs mindestens einer seitlichen Verschiebung in der Aufnahmeebene des auf dem CCD gebildeten Bildes,
   - und Durchführen einer oder mehrerer Aufnahmen im Bereich des genannten CCDs für jede dieser Verschiebungen.

3. Verfahren nach Anspruch 1, **dadurch gekennzeichnet, daß** eine einzige Belichtung des auf dem LCD angezeigten Bildes durchgeführt wird und daß jedes der Pixel des genannten Bildes einer kontinuierlichen Verschiebung entlang einer kreisförmigen Bahn in der Belichtungsebene unterworfen wird, wobei die Verschiebung jedes der Pixel in bezug auf das betroffene Pixel zentriert ist.

4. Verfahren nach Anspruch 1, **dadurch gekennzeichnet, daß**:

   - eine Redimensionierung des wiederzugebenden digitalen Bildes durchgeführt wird;
   - das genannte Bild in zwei auf dem LCD anzeigbare Raster aufgeteilt wird;
   - und für jedes Raster des auf dem LCD angezeigten Bildes eine Belichtung vorgenommen wird, indem zwischen den beiden Belichtungen eine diskrete Verschiebung der Gesamtheit der Pixel des auf dem LCD angezeigten Bildes gemäß den Orientierungsrichtungen OX und OY der genannten Pixel symmetrisch in bezug auf die Mitte jedes einzelnen der Pixel bewirkt wird.

5. Verfahren nach Anspruch 1, **dadurch gekennzeichnet, daß**:

   - eine Redimensionierung des wiederzugebenden digitalen Bildes durchgeführt wird;
   - das genannte Bild in vier auf dem LCD anzeigbare Raster aufgeteilt wird;
   - und für jedes Raster des auf dem LCD angezeigten Bildes eine Belichtung vorgenommen wird, indem zwischen jeder der vier Belichtungen eine diskrete Verschiebung der Gesamtheit der Pixel des auf dem LCD angezeigten Bildes gemäß den Orientierungsrichtungen OX und OY der genannten Pixel symmetrisch in bezug auf die Achsen OX und OY der Pixel bewirkt wird.

6. Verfahren nach einem der Ansprüche 4 und 5, **dadurch gekennzeichnet, daß** jedes Raster drei Bildebenen aufweist, entsprechend den drei Farben rot, grün und blau, wobei die resultierenden Bilder entsprechend dem Verfahren der additiven Farbmischung farbig sind.

7. Vorrichtung zur visuellen Wiedergabe eines oder mehrerer digitaler Bilder, welche auf einem transparenten LCD-Bildschirm (16) angezeigt sind, **dadurch gekennzeichnet, daß** sie folgendes umfaßt:

   - eine Lichtquelle (1), auf deren optischer Bahn der genannte LCD-Bildschirm (16) angeordnet ist, auf dem die digitalen Bilder insbesondere durch eine Zentraleinheit angezeigt sind,
   - einen Verschluß (3), der dazu bestimmt ist, den Lichtstrahl bei Bedarf zu verschließen;
   - ein Projektionsobjektiv (11), welches zwischen dem LCD-Bildschirm (16) und dem zu belichtenden Papier (12) angeordnet ist;
   - einen linearen Polarisationsfilter (17), der zwischen der Lichtquelle (1) und dem LCD-Bildschirm angeordnet ist;
   - eine einzige Platte (15) mit parallelen Flächen und konstanter Dicke, welche für das Spektrum des verwendeten Lichtes transparent ist und auf der optischen Bahn OZ der Quelle zwischen dem LCD-Bildschirm (16) und dem Projektionsobjektiv (11) angeordnet ist, wobei die genannte Platte mit parallelen Flächen dazu geeignet ist, zu einer diskreten oder kontinuierlichen Rotationsbewegung angetrieben zu werden, deren Rotationsachse parallel oder nicht parallel zur optischen Achse ist, wobei die genannte Platte (15) um einen festen Winkel $\alpha$ in bezug auf die zu ihrer Rotationsachse rechtwinklige Ebene geneigt ist.

8. Vorrichtung nach Anspruch 7, **dadurch gekennzeichnet, daß** sie ferner einen motorisierten (6) Objektivrevolver (5) aufweist, welcher im Hinblick auf die Herstellung von Farbfotos Filter, nämlich einen roten, grünen und blauen, trägt.

9. Vorrichtung nach einem der Ansprüche 7 und 8, **dadurch gekennzeichnet, daß** die Rotation der Platte mit parallelen Flächen (15) mittels eines elektrischen Motors erfolgt.

10. Vorrichtung nach Anspruch 7, **dadurch gekennzeichnet, daß** sie weiterhin folgendes umfaßt:

   ◆ eine hinter dem LCD-Bildschirm (16) befindliche Blende (24), welche dazu bestimmt ist, nur einen Teil der aktiven Zone (13) jedes der LCD-Pixel auszuwählen;
   ◆ ein Projektionsobjektiv (26), welches dazu bestimmt ist, auf der Blende (24) das auf dem LCD angezeigte Bild anzuzeigen;
   ◆ eine Feldlinse (25), welche dazu bestimmt ist, den von der Blende (24) ausgehenden Lichtstrahl im Bereich des Projektionsobjektivs (11) zu konvergieren;

   wobei die genannten Platte (15) mit parallelen Flächen auf der optischen Bahn OZ der Quelle zwischen der Feldlinse (25) und dem Projektionsobjektiv (11) angeordnet ist.

11. Vorrichtung zur Aufnahme eines digitalen Bildes auf dem ladungsgekoppelten CCD-Bauelement einer Kamera, **dadurch gekennzeichnet, daß** sie folgendes umfaßt:

   ◆ ein Aufnahmeobjektiv (31), welches zwischen der CCD-Kamera (32) und dem Gegenstand oder Objekt (30) angeordnet ist, von dem eine digitale Bildaufnahme erwünscht ist;
   ◆ eine einzige Platte (15) mit parallelen Flächen und konstanter Dicke, welche für das Spektrum des verwendeten Lichtes transparent ist und auf der optischen Bahn zwischen der CCD-Kamera und dem Aufnahmeobjektiv angeordnet ist, wobei die genannte Platte mit parallelen Flächen dazu geeignet ist, zu einer diskreten Rotationsbewegung angetrieben zu werden, deren Rotationsachse parallel oder nicht parallel zur optischen Achse verläuft, wobei die genannte Platte in einem festen Winkel $\alpha$ in bezug auf die rechtwinklig zu ihrer Rotationsachse verlaufende Ebene geneigt ist.

12. Vorrichtung zur Projektion eines digitalen Bildes, insbesondere auf einen Bildschirm, mit dem Ziel seiner visuellen Wiedergabe, **dadurch gekennzeichnet, daß** sie folgendes umfaßt:

   ◆ eine Lichtquelle (33),
   ◆ ein Mittel zum Auftrennen des einfallenden, von der Lichtquelle ausgehenden Strahles in drei diskrete Strahlen, welche den drei Grundfarben rot, grün und blau entsprechen, wobei auf der optischen Bahn jeder dieser Strahlen ein linearer Polarisationsfilter und ein transparenter, monochromer LCD-Bildschirm angeordnet sind, wobei jeder der drei LCD gleichzeitig das gleiche digitale Bild anzeigt, insbesondere unter Verwendung einer Zentraleinheit,
   ◆ ein Organ (38) zur Zusammenführung der von jedem der drei LCDs ausgehenden Signale;
   ◆ ein Projektionsobjektiv (39), welches zwischen dem Zusammenführungsorgan und dem Bildschirm (40) angeordnet ist, um das projizierte Bild aufzunehmen;
   ◆ eine einzige Platte (15) mit parallelen Flächen und konstanter Dicke, welche für das Spektrum des verwendeten Lichtes transparent ist und auf der optischen Bahn zwischen dem Zusammenführungsorgan und dem Projektionsobjektiv angeordnet ist, wobei die genannte Platte mit parallelen Flächen zu einer kontinuierlichen Rotationsbewegung angetrieben wird, deren Rotationsachse parallel oder nicht parallel zur optischen Achse ist,

   wobei die genannte Platte (15) um einen festen Winkel $\alpha$ in bezug auf die zu ihrer Rotationsachse rechtwinklige Ebene geneigt ist.

**Claims**

1. Process for visually reconstructing a digital image displayed on a transparent LCD liquid crystal screen, ***characterized* in that** it consists:

   • in forming the image displayed on the LCD on the visual reconstruction support, and in particular on a photosensitive paper by means of a projection objective;

- in effecting by means of a single optical member at least one lateral shift in the plane of projection of each of the pixels of the image displayed on the LCD;
- and in carrying out one or more exposures at the level of the said visual reconstruction support for each of these shifts.

2. Process for acquiring a digital image on the charge coupled circuit (CCD) of a camera, **characterized in that** it consists:

- in forming the image of a subject on the CCD by means of an acquisition objective;
- in effecting by means of a single optical member at least one lateral shift in the plane of acquisition of the image formed on the CCD,
- and in carrying out one or more acquisitions at the level of the said CCD for each of these shifts.

3. Process according to Claim 1, **characterized in that** a single exposure of the image displayed on the LCD is performed, and **in that** each of the pixels of the said image undergoes a continuous shift along a circular track in the plane of exposure, the said shift of each of the pixels being centred with respect to the pixel considered.

4. Process according to Claim 1, **characterized in that**:

- a resizing of the digital image to be reproduced is performed;
- the said image is divided into two frames displayable on the LCD;
- and for each frame of the image displayed on the LCD an exposure is effected while performing between the two exposures a discrete shift of the set of pixels of the image displayed on the LCD along directions of orientation OX and OY of the said pixels symmetrically with respect to the centre of each of the pixels.

5. Process according to Claim 1, **characterized in that**:

- a resizing of the digital image to be reproduced is performed;
- the said image is divided into four frames displayable on the LCD;
- and for each frame of the image displayed on the LCD an exposure is effected while performing between each of the four exposures a discrete shift of the set of pixels of the image displayed on the LCD along directions of orientation OX and OY of the said pixels symmetrically with respect to the axes OX and OY of the pixels.

6. Process according to one of Claims 4 and 5, **characterized in that** each of the frames undergoes three image planes, according to the three colours, red, green and blue, the resulting images then being in colour according to the additive synthesis process.

7. Device for visually reconstructing one or more digital images displayed on a transparent LCD screen (16), **characterized in that** it comprises:

- a light source (1), in the optical path of which is positioned the said LCD screen (16) at the level of which are displayed digital images, in particular by a central unit,
- a shutter (3), intended to shut off the light beam on request;
- a projection objective (11), situated between the LCD screen (16) and the paper to be exposed (12);
- a linear polarizer (17) situated between the light source (1) and the LCD screen;
- a single parallel-sided plate (15) of constant thickness which is transparent to the spectrum of the light employed, situated in the optical path OZ of the source between the LCD screen (16) and the projection objective (11), the said parallel-sided plate being able to be moved with a discrete or continuous rotational motion, the axis of rotation of which is parallel or otherwise to the optical axis, the said plate (15) being inclined by a fixed angle $\alpha$ with respect to the plane perpendicular to its axis of rotation.

8. Device according to Claim 7, **characterized in that** it furthermore comprises a motorized (6) turret (5) holding filters, respectively red, green and blue, with a view to the production of colour photographs.

9. Device according to one of Claims 7 and 8, **characterized in that** the rotation of the parallel-sided plate (15) is performed by means of an electric motor.

10. Device according to claim 7, **characterized in that** it further comprises:

- a mask (24) situated downstream of the LCD screen (16), intended for selecting only part of the active zone (13) of each of the LCD pixels;
- a projection objective (26), intended for displaying on the mask (24) the image displayed on the LCD;
- a field lens (25), intended for converging the light beam from the mask (24) at the level of the projection objective (11); said parallel-sided plate (15) being situated in the optical path OZ of the source between the field lens (25) and the projection objective (11).

11. Device for acquiring on the charge coupled circuit (CCD) of a camera a digital image, *characterized* **in that** it comprises:

- an acquisition objective (31), situated between the CCD camera (32) and the subject or the object (30) whose digital image it is desired to acquire;
- a single parallel-sided plate (15) of constant thickness which is transparent to the spectrum of the light employed, situated in the optical path between the CCD camera and the acquisition objective, the said parallel-sided plate being able to be moved with a discrete rotational motion, the axis of rotation of which is parallel or otherwise to the optical axis, the said plate being inclined by a fixed angle a with respect to the plane perpendicular to its axis of rotation.

12. Device for projecting a digital image, in particular onto a screen, with a view to its visual reconstruction, *characterized* **in that** it comprises:

- a light source (33),
- a member for splitting the incident beam from the light source into three distinct beams, corresponding to the three primary colours red, green and blue, in the optical path of each of which are positioned a linear polarizer and a monochrome transparent LCD screen, each of the three LCDs simultaneously displaying the same digital image, in particular via a central unit,
- a member (38) for combining the signals from each of the three LCDs;
- a projection objective (39), situated between the combining member and the screen (40) intended for receiving the projected image;
- a single parallel-sided plate (15) of constant thickness which is transparent to the spectrum of the light employed, situated in the optical path between the combining member and the projection objective, the said parallel-sided plate being able to be moved with a continuous rotational motion, the axis of rotation of which is parallel or otherwise to the optical axis, the said plate (15) being inclined by a fixed angle $\alpha$ with respect to the plane perpendicular to its axis of rotation.

FIG.1

FIG.2

FIG.3

FIG.4a

FIG.4b

EP 0 987 875 B1

# FIG. 5

# FIG.6

17

## FIG.7

## FIG.8

# FIG.9

# FIG.10

# FIG.11

FIG.12